# EUROPEAN PATENT SPECIFICATION

(11) **EP 0 313 694 B1**
(45) Date of publication and mention of the grant of the patent: **03.02.1993**
(21) Application number: 87309511.1
(22) Date of filing: 28.10.1987
(51) Int. Cl.: B60R 25/08

(54) **A hydraulic or pneumatic pipeline control arrangement**
Steuerelement für Hydraulik- oder Pneumatikleitungen
Elément de commande pour des conduits hydrauliques ou pneumatiques

(43) Date of publication of application: 03.05.1989
(73) Proprietor: Irving, Michael, Chadderton, OL9 7HT Greater Manchester (GB)
(72) Inventor: Irving, Michael, Chadderton, OL9 7HT Greater Manchester (GB)
(74) Representative: Barker, Rosemary Anne

(56) References cited:
- EP-A- 0 239 987
- WO-A-82/03604
- WO-A-85/04845
- DE-C- 834 189
- FR-A- 2 261 907

## Description

This invention concerns a control arrangement for a fluid pipeline, particularly but not exclusively for a hydraulic pipeline for controlled locking or jamming or a hydraulic braking system, e.g. of a vehicle or of other hydraulically operated equipment.

For the avoidance of any doubt, the term "fluid" as used herein refers to any liquid or gas or mixture of liquids or gases (e.g. air).

Numerous anti-theft devices for vehicles have been proposed, primarily concerning actuation of alarm signals or prevention of ignition. It would, however, be advantageous to provide means for locking or jamming a vehicle's brakes so that they cannot be released by anyone except an authorised user. This would prevent the vehicle being driven away even if the conventional ignition switch was by-passed to start the engine. Alternatively or additionally the clutch or automatic transmission of the vehicle could be hydraulically blocked when the authorised user leaves the vehicles so that, in the event that a thief manages to by-pass the ignition, the vehicle could not be driven away.

It is an object of this invention to provide a control arrangement for a hydraulic or pneumatic pipeline in a vehicle or in other machinery, which arrangement will be operable only by an authorised user to selectively block or open said pipeline, and thus prevent or permit operation of the vehicle or machinery respectively. The arrangement will thus have both automatic safety and anti-theft features.

One prior system with the features of the preamble of Claim 1 is known from EP-A-0 239 987. An elongate cylindrical rotary valve element is precisely cross-bored to allow or deny registration with and communication between aligned inlet and outlet ducts, and is further relieved to permit indirect communication between the ducts using a by-pass connection that involves pressurisation of the valve element even during lock-up conditions. Another prior system using an axial slide valve is known from WO-A-8 504 845 which concentrates its attention on a two-stage operation using different piston systems and accumulators, and is directed specifically to avoiding use of one-way check valves.

According to the present invention, there is provided a hydraulic or pneumatic pipeline control arrangement as specified in claim 1.

The term "in parallel" is occasionally used in this specification to refer to the arrangement of the first and second passageways in leading from a 'common input and subsequently connecting to a common output'. It should therefore not be taken to imply that these passageways necessarily extend parallel to each other in the strictly mathematical sense.

The axially movable valve body may advantageously be moved to and fro by means of a single solenoid or a pair of solenoids or by means of a worm drive operated by a reversible motor. However, it could equally well be moved to and fro by vacuum means, by hydraulic or pneumatic means, or even manually.

The spring-loaded element of the one-way valve in the second passageway, which is urged away from its seat by fluid pressure in the desired direction of flow and into contact with its seat by fluid pressure in the opposite direction, may consist of a ball or a needle. Alternatively, however, a flap valve could be used.

The first and second passageways, and thus the entire arrangement, may advantageously be formed within a self-contained, tamper-proof unit. In this way the arrangement can be readily applied to any pre-existing equipment, simply by installation of the unit therein. When such a unit is installed in a vehicle's hydraulic braking system, it may conveniently be fitted in a pipeline between a master cylinder and its slave cylinders.
Appropriate versions of the unit can, of course, be provided for fitment in a single line system, or a dual (tandem) system, or a multiple line system. Of course, such a unit may also be installed in any other hydraulic pipeline, e.g. in a hydraulic clutch or automatic transmission of a vehicle, or in the braking system of a hydraulic press, or in any other type of pipeline wherein fluid may be placed under pressure.

The control arrangement of the invention is preferably actuated by means of a microprocessor such that when a digital code, known only to the authorised user, is keyed into a keyboard, the movable element is actuated to close the first passageway. Re-opening of the first passageway will be achieved in similar manner by the keying in of a code which will cause the first passageway to be re-opened, e.g. by movement of the element in the opposite direction. The code or codes can, of course, be easily changed to guard against discovery by unauthorised persons.

When the first passageway is closed off, hydraulic fluid can still flow via the second passageway, which may be termed a by-pass channel, but only in one direction. In this way, in the case where the arrangement is applied to a vehicle braking system, hydraulic brakes can be applied after the shut-off valve is actuated to close the first passageway, but they cannot be released again (not until the shut-off valve is actuated to open the first passageway) because the fluid is unable to drain away from the brake cylinder or cylinders.

The invention will be described further, by way of example, with reference to the accompanying drawings, in which:
Fig. 1 is a cross-section of a first practical embodiment of a hydraulic pipeline control arrangement in accordance with the invention when in the 'neutral' or 'non-applied' mode, i.e. with the first passageway open;
Fig. 2 is a view similar to Fig. 1 showing the arrangement in the 'applied mode' i.e. with the first passageway closed;
Fig. 3 is a transverse cross-section, to a slightly larger scale than Figs. 1 and 2, along the line III-III in Fig. 2; and
Fig. 4 is a cross-section of a second practical embodiment of a hydraulic pipeline control arrangement in accordance with the invention when in the "applied" mode, i.e. with the first passageway closed.

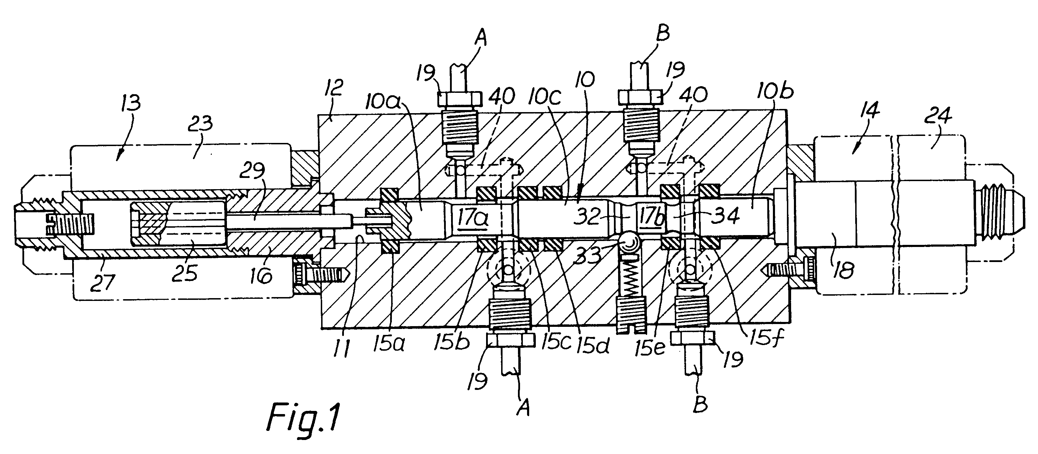

With reference to Figs. 1 to 3, the first embodiment of the arrangement of the invention, is a device designed for installation in a tandem hydraulic braking system of a vehicle. This device comprises a movable element, in the form of an elongate spool 10, which is reciprocable in a bore 11 of a housing 12 under the influence of respective solenoids 13, 14.

The housing 12 is elongate and is substantially rectangular in cross-section. The bore 11 extends along the longitudinal axis of the body 12 and is substantially circular in cross-section. Inside the bore 11, at spaced intervals, there are six rubber sealing rings 15a to 15f retained in respective annular grooves, but projecting therefrom into the bore 11. The spool 10 extends through the rings 15. It is somewhat shorter in length than the housing 12 and it is generally cylindrical, but it will be noted that it has respective end sections 10a, 10b and a central section 10c of enlarged diameter and intervening sections 17a, 17b of reduced diameter. The enlarged diameter sections 10a, 10b, 10c are a close sliding fit in the sealing rings 15.

The solenoids 13, 14 comprise coils 23, 24 which are fitted to the respective ends of the housing 12 by means of connection pieces 16, 18, as well as plungers 25, which are movable to and fro between respective stop members 27, and the respective connection pieces 16, 18. These plungers 25 have shafts 29 which engage the respective ends of the spool 10 and thus serve to push the spool 10 in one direction or the other, depending on which coil 23 or 24 is energised.

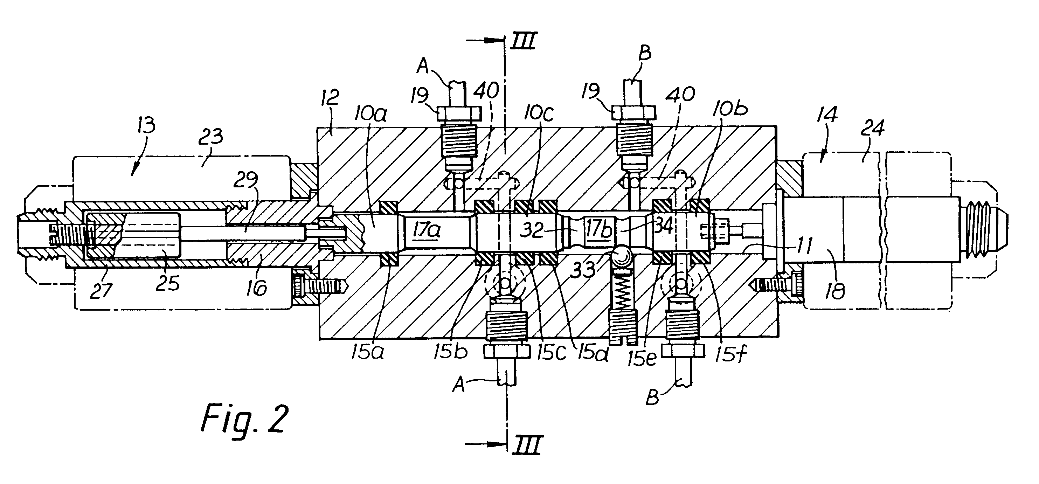

As this particular device is designed for use with a tandem hydraulic braking system, there are two separate transverse passageways through the housing 12, designated generally by reference numerals A and B in Figs. 1 and 2. Each passageway consists of a pair of staggered (or offset) parallel ducts which extend perpendicularly to the axis of the housing 12, from opposite sides of the bore 11 to the exterior of the body 12. In use, and as indicated in Figs. 1 and 2, the ends of two parts of a first hydraulic pipe are attached to the respective ducts of passageway A by way of tap screws 19. Two parts of a second hydraulic pipe are similarly connected by having their ends attached to the respective ducts of passageway B, also by tap screws 19.

In the 'neutral' or 'non-applied' mode of the device as shown in Fig. 1, the solenoid 23 is energised so that its plunger 25 pushes the spool 10 to the right. In this position of the spool 10, the reduced diameter sections 17a, 17b thereof extend between the junctions of each pair of staggered ducts of passageway A and passageway B respectively, with the bore 11. Thus, in each passageway fluid can flow freely from one duct to the other, in either direction, by way of the annular space remaining between the reduced diameter section (17a, 17b) of the spool 10 and the interior of the bore 11. Leakage from the bore 11 is prevented by engagement of the enlarged diameter portions 10a, 10b of the spool 10 with the terminal sealing rings 15a, 15f and the passageways A and B are separated by enlarged diameter portion 10c engaging with the sealing rings 15c and 15d.

Conversely, in the 'applied' mode of the device, as shown in Fig. 2, the solenoid 23 is deactivated and the other solenoid 24 is energised so that its plunger (not shown) pushes the spool 10 to the left. In this position of the spool 10, the enlarged diameter sections 10c, 10b thereof have slid into sealing engagement with the sealing rings 15b and 15e which are located between the respective duct junctions. Thus, the previous throughpassageways A ad B are blocked off.

The spool 10 moves approximately 16mm between the respective positions (i.e. the 'neutral' and 'applied' modes), and is releasably held in each by means of a spring-loaded ball bearing 33, which is disposed in the housing 12 and engages into respective spaced apart grooves 32, 34 in the reduced diameter section 17b of the spool 10.

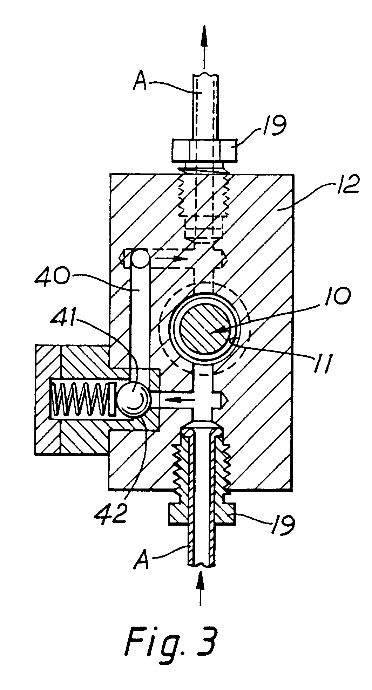

For each passageway A and B, a respective bypass channel 40 is provided which is of angled configuration and extends directly between the respective staggered ducts, as indicated most clearly in Fig. 3. A one-way valve, in the form of a spring-loaded ball 41, is located at one of the bends in the channel 40 so that fluid can pass in the direction indicated by the arrows (since the pressure thereof forces the ball back from its seat 42 against the action of the spring), but not in the opposite direction (since back pressure forces the ball into engagement with its seat 42). Thus, when the main passageways A and B are blocked by the device being in the 'applied' mode, fluid can still flow through the bypass channels 40 in one direction until the pressure in the pipe beyond the valve 41 in the flow direction is sufficiently great to close off that valve. The relevance of this in the practical application of the device will be explained in the following paragraphs.

It will be appreciated, of course, that each of the staggered transverse passageways A and B constitutes a first passageway as referred to in the foregoing general statement of the invention, with the spool 10 acting as a common shut-off valve so that both first passageways A and B are simultaneously open or closed. The respective by-pass channels 40, similarly, constitute respective second passageways, having respective one-way valves 41.

It is envisaged that the embodiment of the device which has been described and illustrated will be installed in a vehicle's hydraulic braking system at a convenient location between the master cylinder and the slave cylinders. The pipeline connected to passageway A will then be the hydraulic pipeline to the brakes of one axle, whilst the pipeline connected to passageway B will supply the brakes of the other axle.

The device will be actuated by a microprocessor fitted at any convenient place in the vehicle and having an input terminal in the form of a small 10-digit key pad located on the dashboard. A four digit code known only to the owner/driver of the vehicle would be keyed in either to put the device into its 'applied' mode or to return it to its 'neutral' mode. The same code could be used for both operations, if desired, to save having to memorize two separate digit sequences, and, of course, it would be possible to change the effective code from time to time to minimize the likelihood of its discovery by unauthorised persons.

With the device in the 'neutral' mode, the brakes will work in the normal way (as if the device were not present), with free flow of hydraulic fluid through passageways A and B respectively. On parking the vehicle, the driver will punch the appropriate code into the key pad to put the device into the 'applied' mode and block off the main throughpassageways A and B. When the brake pedal is subsequently depressed to apply the brakes, hydraulic fluid will flow through the respective by-pass channels 40. However, as it cannot return when the pedal is released, the pressure is maintained and the brakes are effectively locked until the device is returned to 'neutral' mode by further coded instructions to the microprocessor. Alternatively, the brakes can be applied before the device is switched to 'applied' mode and the pressure will similarly be maintained until the device is returned to 'neutral' mode.

It will be appreciated that in the foregoing situation the device acts as an extremely effective anti-theft measure, since even if someone can gain access to the vehicle and start the engine the brakes will remain applied until released by the appropriate code input to the microprocessor. In this respect, the device should, of course be designed as a sealed, tamper-proof unit so that it cannot be interfered with in any way and cannot be by passed.

A similar embodiment of the device of the invention could be installed in the supply lines of a hydraulic clutch such that when it is put into the "applied" mode the clutch can only be disengaged and/or maintained in its disengaged condition, thereby preventing transmission of torque from an engine. In the case of a vehicle, this again would prevent it being driven away by an unauthorized user. Similarly, the device could be installed into the hydraulic supply lines of a vehicle's automatic transmission so that in the "applied" mode it prevents effective engagement of drive gears. Furthermore, the above-described device could be used in the hydraulic system of any hydraulically operated equipment, for example a hydraulic press. In the latter case it would primarily be a safety measure preventing inadvertant operation. However, it would also prevent unauthorised use. Needless to say, the device could easily be modified for a single line hydraulic system for which only one throughpassageway would be required, or a multiple line system for which more than two throughpassageways would be required.

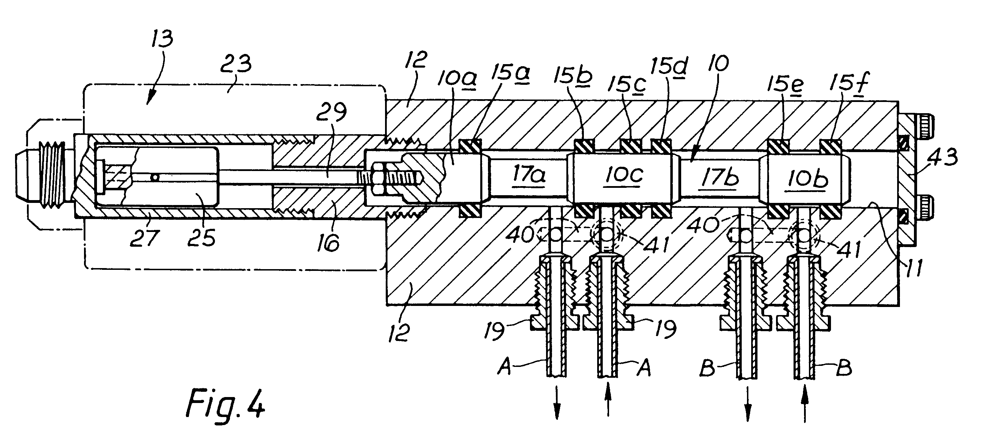

Fig. 4 illustrates a slightly different practical embodiment of a device in accordance with the invention. To avoid unnecessary repetition, the same reference numerals have been allocated to parts corresponding to those in the previously described embodiment (Figs. 1 and 3) and the arrangement and operation of these similar parts will not be referred to in any detail.

This further embodiment also comprises a tamper-proof unit designed for installation in a tandem hydraulic braking system of a vehicle. However, compared to the previous embodiment, shown in Figs. 1 to 3, it is more compact and less expensive to manufacture, so it will probably be commercially more favourable. The reduced size and reduced cost result in part from provision of only a single solenoid 13 at one end of the housing 12, which solenoid 13 is capable of alternately attracting or repelling its plunger 25, which in this case is fixedly attached to the spool 10, simply by reversal of the direction of electric current therethrough and hence reversal of its polarity. At the other end of the housing 12 there is simply a sealed end plate 43. This contrasts with the previous embodiment wherein two solenoids were provided, each acting only to push away the spool or being switched off to allow its return by action of the other. Furthermore, the pairs of ducts of passageway A and passageway B, which conduct fluid in and out of the (bore) 11, respectively, are provided closely adjacent each other at the same side of the housing 12. In other words, the respective first passageways loop round via the bore 11, when the latter is not blocked by the enlarged portions 10c and 10b of the spool 10. The thickness of the housing 12 at the side opposite these passageways A and B can thus be reduced, which saves material. Also, with the pairs of ducts at the same side of the housing 12, the by-pass channels 40 are straightforward or U-shaped passages between the respective input and output ducts and the overall production of the housing 12 is simpler and less costly than with the configuration of the previous embodiment.

In all other respects, however, the operation of this embodiment is analogous to the operation of the above-described embodiment, and it, also, could be modified in design for fitment in a single line system or a multiple line system.

The invention is not limited to the specific details of the foregoing exemplary embodiment and many variations are possible. For example,the spool which is shown reciprocable in linear manner by means of a single solenoid or a pair of solenoids may be movable in linear manner by means of a motor or by mechanical, hydraulic or pneumatic means, or even manually if need be. In this respect it may be advantageous to replace the single solenoid in the Fig. 4 embodiment by a reversible electric motor having a screw threaded shaft engagable with one end of the spool. Then, when the motor is operated in one direction the spool would be drawn towards the motor by being screwed onto the shaft, and when it is reversed the spool would be moved in the other direction by being unscrewed to some extent. Alternatively some form of vacuum or suction means could move the spool in one direction, return being effected under the influence of spring means.

Other aspects of the overall arrangement may also vary. For example, microprocessor control is not essential and may be replaced by a simple mechanical or electrical switch. Also, the actuation of the device, e.g. to jam a vehicle braking system or disable the clutch or automatic transmission, may be interlinked with a conventional vehicle alarm system.

It will be appreciated, of course, that the invention can equally well be applied to pneumatically controlled equipment, for example air brakes, and the claimed control arrangement could be incorporated from the outset, rather than being formed as a separate unit for later installation.

## Claims

1. A hydraulic or pneumatic pipeline control arrangement comprising a housing (12) having first (A,B) and second (40) fluid passageways which lead from a common input and subsequently connect to a common output, wherein the first passageway is constituted by ducts leading from a bore (11) and is provided with a shut-off valve in the form of a movable valve body (10) which is arranged in the bore (11) and is capable of selectively opening or closing said first passageway (A; B), and wherein the second passageway (40) is constituted by a by-pass channel extending between the ducts of the first passageway and is provided with a one-way valve consisting of a spring-loaded element (41) which is urged away from its seat (42) by fluid pressure in one direction of flow and into contact with its seat (42) by fluid pressure in the opposite direction, thereby permitting fluid flow through said second passageway in one direction only such that, when the shut-off valve (10) is closed, application of hydraulic or pneumatic pressure via the second passageway (40) is possible, but release of hydraulic or pneumatic pressure is prevented, characterised in that the ducts of the first fluid passageway (A,B), which lead from the bore (11), are offset from each other, in that the movable valve body (10) consists of an axially slidable spool or shuttle with a reduced diameter section (17a; 17b) to provide the fluid passageway, in that the bore (11) is provided with sealing ring means (15b; 15e) at a location along the bore (11) that is between the offset ducts, the axially slidable spool or shuttle (10) closing said first passageway (A; B) by sealing engagement with said sealing ring means (15b,15e), and in that the by-pass channel (40) providing the second passageway extends through the housing (12), directly connecting the offset ducts of the first passageway (A; B).

2. An arrangement as claimed in claim 1, wherein the axially slidable spool or shuttle (10) forming the shut-off valve is reciprocable under the influence of solenoid means (13,14).

3. An arrangement as claimed in claim 2, wherein the axially slidable spool or shuttle (10) forming the shut-off valve is reciprocable by means of a worm drive operated by a reversible electric motor.

4. An arrangement as claimed in any preceding claim, wherein the first (A,B) and second passageways (40) are formed within a self-contained tamper-proof unit.

5. A vehicle having a braking system controlled by an arrangement as claimed in any preceding claim.

## Patentansprüche

1. Steuerelement für Hydraulik- oder Pneumatikleitungen, mit einem Gehäuse (12), das erste (A, B) und zweite (40) Strömungswege aufweist, die von einem gemeinsamen Eingang kommen und nachfolgend zu einem gemeinsamen Ausgang führen, wobei der erste Strömungsweg durch Kanäle gebildet ist, die von einer Bohrung (11) aus verlaufen, und mit einem Absperrventil in Form eines beweglichen Ventilkörpers (10) versehen ist, der in der Bohrung (11) angeordnet ist und wahlweise den ersten Strömungsweg (A; B) öffnen oder schließen kann, und bei welchem der zweite Strömungsweg (40) durch einen By-pass-Kanal gebildet ist, der sich zwischen den Kanälen des ersten Strömungsweges erstreckt und mit einem Einweg-Ventil versehen ist, das aus einem federbelasteten Element (41) besteht, das in der einen Strömungsrichtung durch den Druck des Strömungsmittels von seinem Ventilsitz (42) abgehoben und in der entgegengesetzten Richtung durch den Druck des Strömungsmittels in Kontakt mit seinem Ventilsitz gehalten wird und dadurch eine Strömung durch den zweiten Strömungskanal nur in einer Richtung erlaubt, dergestalt, daß bei geschlossenem Absperrventil (10) die Anwendung von hydraulischem oder pneumatischem Druck über den zweiten Strömungsweg (40) möglich ist, die Freigabe von hydraulischem oder pneumatischem Druck jedoch verhindert wird, dadurch gekennzeichnet, daß die Kanäle des ersten Strömungsweges (A, B), die aus der Bohrung (11) kommen, gegeneinander versetzt sind, daß der bewegliche Ventilkörper (10) aus einer axial verschiebbaren Rolle oder einem Schieber mit einem Abschnitt (17a; 17b) verminderten Durchmessers besteht, um den Strömungsweg zu bilden, daß die Bohrung (11) an einer Stelle, die sich zwischen den gegeneinander versetzten Kanälen befindet, mit Dichtungsringen (15b; 15e) versehen ist und die axial verschiebbare Rolle oder der Schieber (10) den ersten Strömungsweg (A; B) durch Dichtungsschluß mit diesen Dichtungsringen (15b, 15e) verschließt, und daß der den zweiten Strömungsweg bildende By-pass-Kanal (40) sich durch das Gehäuse (12) erstreckt und die gegeneinander versetzten Kanäle des ersten Strömungsweges (A; B) direkt miteinander verbindet.

2. Steuerelement nach Anspruch 1, bei welchem die axial verschiebbare Rolle oder der Schieber (10), der das Absperrventil bildet, mit Hilfe einer Solenoid-Anordnung (13, 14) hin- und herbewegbar ist.

3. Steuerelement nach Anspruch 2, bei welchem die das Absperrventil bildende axial verschiebbare Rolle oder der Schieber (10) mittels eines von einem umschaltbaren Elektromotor betätigten Schneckengetriebes hin- und herbewegbar ist.

4. Steuerelement nach einem der vorangehenden Ansprüche, bei welchem der erste (A, B) und zweite (40) Strömungsweg innerhalb einer in sich geschlossenen, stoßfesten Einheit ausgebildet sind.

5. Fahrzeug mit einem Bremssystem, das durch ein Element nach einem der vorangehenden Ansprüche gesteuert ist.

## Revendications

1. Elément de commande pour des conduites hydrauliques ou pneumatiques comportant un corps (12) ayant des premier (A, B) et deuxième passages (40) qui proviennent d'une entrée commune et se raccordent ensuite à une sortie commune, dans lequel le premier passage est constitué par des conduits provenant d'un alésage (11) et est pourvu d'une soupape de coupure sous la forme d'un corps de soupape mobile (10) qui est disposé dans l'alésage (11) et est capable d'ouvrir ou de fermer de manière sélective ledit premier passage (A; B), et dans lequel le deuxième passage (40) est constitué par un canal de dérivation s'étendant entre les conduits du premier passage et est pourvu d'un clapet anti-retour constitué par un élément chargé par ressort (41) qui est poussé à l'écart de son siège (42) par la pression de fluide dans une direction d'écoulement et en contact avec son siège (42) par la pression de fluide dans la direction opposée, permettant ainsi l'écoulement de fluide par ledit deuxième passage dans une seule direction de sorte que, lorsque la soupape de coupure (10) est fermée, l'application de pression hydraulique ou pneumatique par le deuxième passage (40) est possible, mais la libération de pression hydraulique ou pneumatique est empêchée, caractérisé en ce que les conduits du premier passage de fluide (A, B), qui proviennent de l'alésage (11), sont décalés l'un par rapport à l'autre, en ce que le corps de soupape mobile (10) consiste en un tiroir axialement mobile avec une section de diamètre réduit (17a; 17b) afin de procurer le passage de fluide, en ce que l'alésage (11) est pourvu de moyens d'étanchéité (15b; 15e) dans un emplacement le long de l'alésage (11) qui est entre les conduits décalés, le tiroir axialement coulissant (10) fermant ledit premier passage (A; B) par engagement étanche avec lesdits moyens d'étanchéité (15b; 15e), et en ce que le canal de dérivation (40) procurant le deuxième passage s'étend à travers le corps (12), reliant directement les conduits décalés du premier passage (A; B).

2. Elément selon la revendication 1, dans lequel le tiroir axialement coulissant (10) constituant la soupape de coupure est alternativement mobile sous l'influence de moyens électromagnétiques (13, 14).

3. Elément selon la revendication 2, dans lequel le tiroir axialement coulissant (10) constituant la soupape de coupure est alternativement mobile sous au moyen d'un entraînement à vis sans fin actionné par un moteur électrique réversible.

4. Elément selon l'une quelconque des revendications précédentes, dans lequel les premier (A, B) et deuxième passages (40) sont formés dans une unité intégrée résistant aux effractions

5. Véhicule ayant un système de freinage commandé par un élément selon l'une quelconque des revendications précédentes.
